Europäisches Patentamt

European Patent Office

Office européen des brevets

(11) Publication number: **0 462 439 A1**

(12) **EUROPEAN PATENT APPLICATION**

(21) Application number: 91109039.7

(22) Date of filing: 03.06.91

(51) Int. Cl.⁵: **G03G 5/10**

(30) Priority: 21.06.90 US 541655

(43) Date of publication of application:
27.12.91 Bulletin 91/52

(84) Designated Contracting States:
**DE FR GB NL**

(71) Applicant: **XEROX CORPORATION**
**Xerox Square - 020**
**Rochester New York 14644(US)**

(72) Inventor: **Simpson, Yonn K.**
**16 Windsor Way**
**Fairport, NY 14450(US)**
Inventor: **Grabowski, Edward F.**
**479 Sherborne Road**
**Webster, NY 14580(US)**
Inventor: **Morris, John J.**
**599 Notredame Drive**
**Webster, NY 14580(US)**
Inventor: **Parikh, Satish R.**
**80 Tree Brook Drive**
**Rochester, NY 14625(US)**
Inventor: **Mishra, Satchidanand**
**459 Sherborne Road**
**Webster, NY 14580(US)**

(74) Representative: **Patentanwälte Grünecker,**
**Kinkeldey, Stockmair & Partner**
**Maximilianstrasse 58**
**W-8000 München 22(DE)**

(54) Plywood suppression in photosensitive imaging members.

(57) A layered photosensitive medium (30) is modified to reduce the effects of destructive interference within the medium caused by reflection from coherent light incident thereon. The modification is to roughen the surface of the substrate (32) upon which the ground plane (34) is formed, the ground plane formed so as to conform to the underlying surface roughness. Light reflected from said ground plane is diffused through the bulk of the photosensitive layer breaking up the interference fringe patterns which are later manifested as a plywood defect on output prints made from the exposed photosensitive medium.

*FIG. 4*

## BACKGROUND AND PRIOR ART STATEMENT

The present invention relates to an imaging system using coherent light radiation to expose a layered member in an image configuration and, more particularly, to suppressing optical interference occurring within the photosensitive member resulting in a defect that resembles the grain in a sheet of plywood. The defect is manifested in output prints derived from the exposed photosensitive member when the exposure is a uniform, intermediate-density gray.

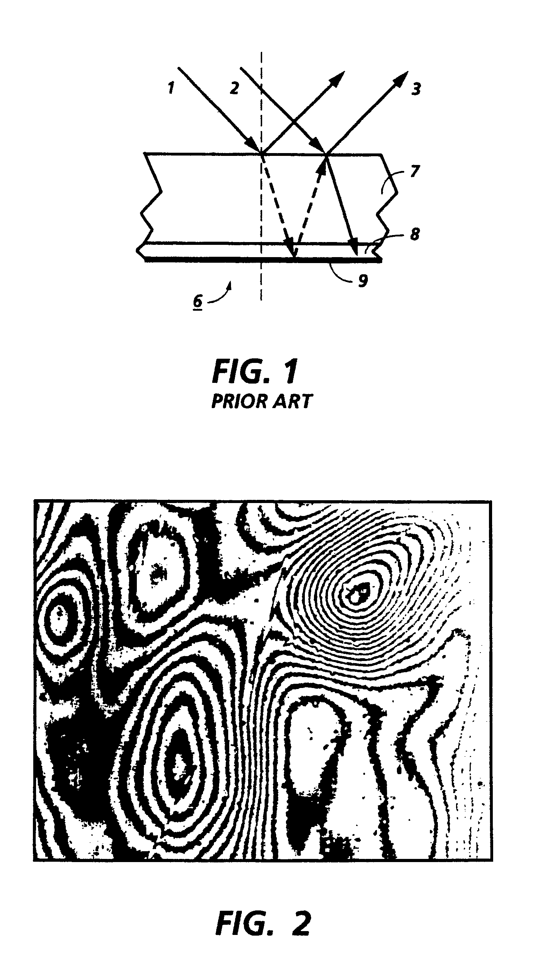

There are numerous applications in the electrophotographic art wherein a coherent beam of radiation, typically from a helium-neon or diode laser is modulated by an input image data signal. The modulated beam is directed (scanned) across the surface of a photosensitive medium. The medium can be, for example, a photoreceptor drum or belt in a xerographic printer, or a photosensitive film. Certain classes of photosensitive medium which can be characterized as "layered photoreceptors" have at least a partially transparent photosensitive layer overlying a conductive ground plane. A problem inherent in using these layered photoreceptors, depending upon the physical characteristics, is the creation of two dominant reflections of the incident coherent light on the surface of the photoreceptor; e.g., a first reflection from the top surface and a second reflection from the top surface of the relatively opaque conductive ground plane. This condition is shown in Figure 1; coherent beams 1 and 2 are incident on a layered photoreceptor 6 comprising a charge transport layer 7, charge generator layer 8, and a ground plane 9. The two dominant reflections are: from the top surface of layer 7, and from the top surface of ground plane 9. Depending on the optical path difference as determined by the thickness and index of refraction of layer 7, beams 1 and 2 can interfere constructively or destructively when they combine to form beam 3. When the additional optical path traveled by beam 1 (dashed rays) is an integer multiple of the wavelength of the light, constructive interference occurs, more light is reflected from the top of charge transport layer 7 and, hence, less light is absorbed by charge generator layer 8. Conversely, a path difference producing destructive interference means less light is lost out of the layer and more absorption occurs within the charge generator layer 8. The difference in absorption in the charge generator layer 8, typically due to layer thickness variations within the charge transport layer 7, is equivalent to a spatial variation in exposure on the surface. This spatial exposure variation present in the image formed on the photoreceptor becomes manifest in the output copy derived from the exposed photoreceptor. Figure 2 shows the areas of spatial exposure variation (at 25x) within a photoreceptor of the type shown in Figure 1 when illuminated by a He-Ne laser with an output wavelength of 633 nm. The pattern of light and dark interference fringes look like the grains on a sheet of plywood. Hence the term "plywood effect" is generically applied to this problem.

One method of compensating for the plywood effect known to the prior art is to increase the thickness of and, hence, the absorption of the light by the charge generator layer. For most systems, this leads to unacceptable tradeoffs; for example, for a layered organic photoreceptor, an increase in dark decay characteristics and electrical cyclic instability may occur. Another method, disclosed in U.S. Patent 4,618,552, is to use a photoconductive imaging member in which the ground plane, or an opaque conductive layer formed adjacent the ground plane, is formed with a rough surface morphology to diffusely reflect the light A still further method.disclosing co-pending application entitled "Photosensitive Imaging Member with a Low-Reflection Ground Plane", USSN           , assigned to the same assignee as the present invention, is to modify the imaging member by forming the ground plane of a low-reflecting conductive material.

According to the present invention the plywood effect is significantly reduced by breaking up the coherence of the dominant reflections from the conductive substrate surface. This is accomplished by forming the conductive ground plane on an underlying dielectric substrate whose surface has been treated to produce a rough surface morphology which is then replicated on the overlying ground plane surface. While it is known in the prior art to utilize a dielectric substrate beneath a ground plane (see U.S. Patents 4,019,902, 4,618, 552, and 4,704,325) it is not known to roughen the substrate surface so as to replicate the roughness in the overlying ground plane. The above-identified prior art reference, U.S. Patent 4,618,552, while describing a ground plane with a roughened surface, does not disclose an underlying dielectric substrate with a roughened surface which is replicated at the ground plane. More particularly the invention relates to a photosensitive imaging member comprising at least a semi-transparent photosensitive layer contiguous to a metallic ground plane substrate, said ground plane formed on a dielectric substrate having a roughened surface, said ground plane conforming to said roughened dielectric substrate surface whereby said ground plane surface is diffusely reflective to light incident thereon.

## DESCRIPTION OF THE DRAWINGS

Figure 1 shows coherent light incident upon a prior art layered photosensitive medium leading to reflections internal to the medium.

Figure 2 shows a spatial exposure variation plywood pattern in the exposed photosensitive medium of Figure 1 produced when the spatial variation in the absorption within the photosensitive member occurs due to an interference effect.

Figure 3 is a schematic representation of an optical system incorporating a coherent light source to scan a light beam across a photoreceptor modified to reduce the interference effect according to the present invention.

Figure 4 shows a cross sectional view of the photoreceptor.of Figure 3 showing a dielectric base with a rough surface morphology replicated in the overlying ground plane.

Figure 5 shows the base surface of Fig. 4 roughened by a laser masking process.

## DESCRIPTION OF THE INVENTION

The present invention will be described in the context of plywood suppression in a xerographic type of reproduction system where an organic layered photoreceptor is exposed by a modulated coherent light pattern generated by a diode laser and modulator system. It is understood, however, that the techniques are applicable to other types of layered photosensitive mediums which are subject to the same type of spatial exposure variation at its surface.

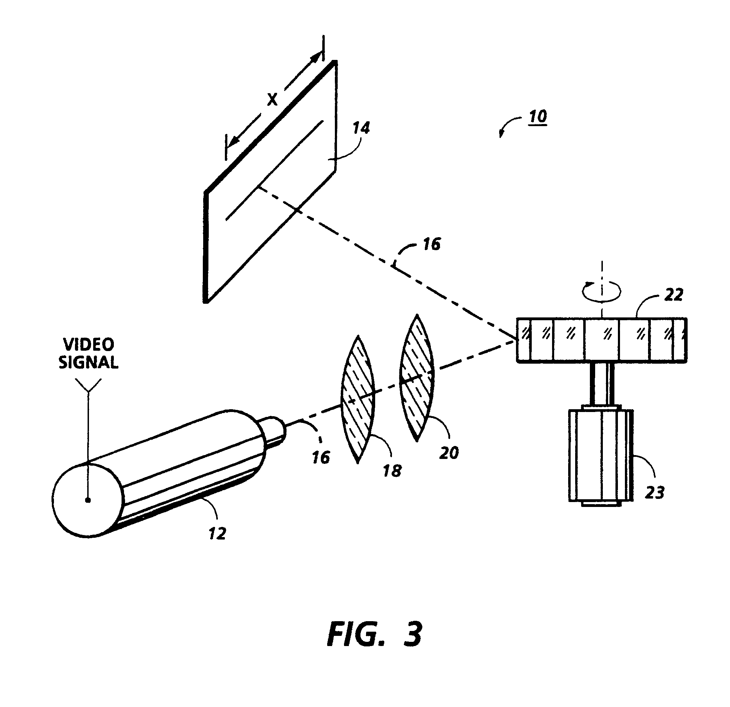

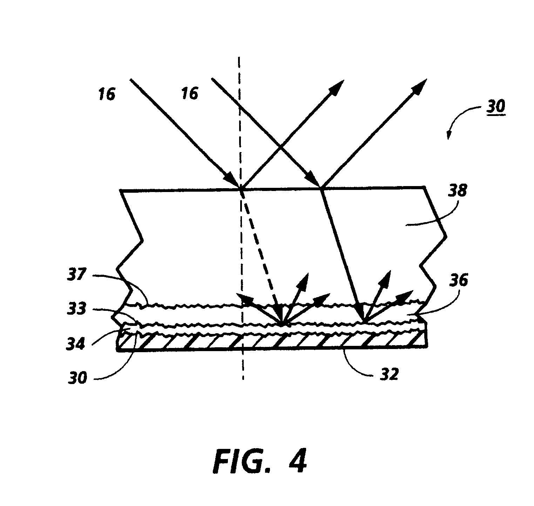

Figure 3 shows an imaging system 10 wherein a diode laser 12 produces a coherent output which is scanned across photoreceptor 14. In response to video signal information representing the information to be printed or copied, the laser diode is driven so as to provide a modulated light output beam 16. Flat field collector and objective lens 18 and 20, respectively, are positioned in the optical path between laser 12 and light beam reflecting scanning device 22. In a preferred embodiment, device 22 is a multi-faceted mirror polygon driven by a motor 23, as shown. Flat field collector lens 18 collimates the diverging light beam 16 and field objective lens 20 causes the collimated beam to be focused onto photoreceptor 14 after reflection from polygon 22. Photoreceptor 14, in a preferred embodiment, is a layered photoreceptor shown in partial cross-section in Figure 4.

Turning now to Figure 4, there is shown a side view of a portion of photoreceptor 14, in cross-section, consisting of a dielectric substrate 32, typically a polythylene terephthalate (PET), conductive ground plane 34, a charge generator layer 36, and a charge transport layer 38. Layers 36 and 38 are of an organic material and are semi-transparent. Various materials for a photoreceptor belt of this basic construction are disclosed in U.S. Patent 4,588,667 assigned to the same assignee as the present invention. The contents of 4,588,667 are hereby incorporated by reference.

Consistent with present day coating techniques, transport layer 38 will unavoidably have some spatial variation in thickness, typically of 0.1 to 1.0 micron. This spatial variation gives rise to a path difference in the incident coherent light beams 16 creating the interference patterns described below. For a 1 micron thickness variation the beam passing through layer 38 will go through four interference fringes for a 633 nm wavelength light source.

In order to reduce the interference effect, substrate 32 has a top surface 30 which has been roughened by one of several techniques described below. Ground plane layer 34 is formed on substrate 32 by, for example, a sputtering or evaporation process and has a surface 33 which follows the contours of the roughened surface 30. Charge generator layer 36, formed on ground plane 34, also has a roughened surface 37 which follows the contours of surfaces 30, 33. The roughened ground plane surface 33 acts to break up the coherence of the rays reflected off from the ground plane.

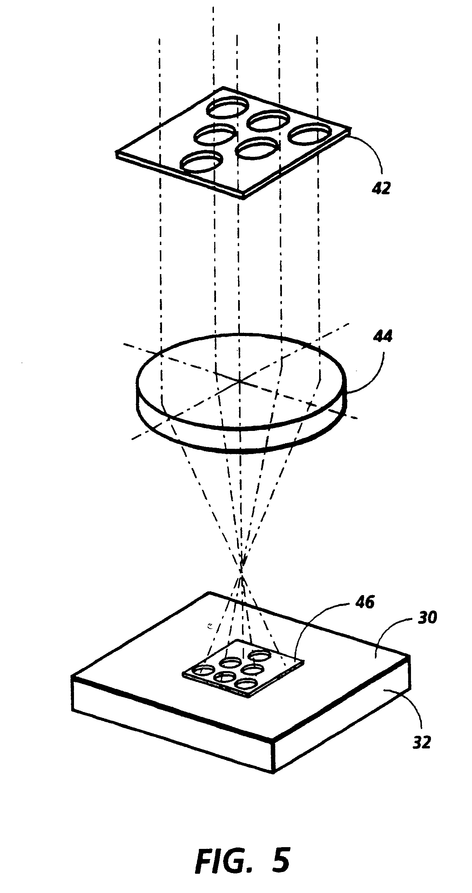

According to a first aspect of the present invention, surface 30 is roughened by a laser ablation process prior to coating of ground plane 34 on its surface. Well defined etch pits are formed at the surface 30 of substrate 32 by an excimer laser working at 248 nm. The geometry and depth of the pits are easily controlled by controlling the incident intensity and the size of the focused light spot. A suitable pattern can be chosen by proper selection of the speed and switching rate and by the movement of the substrate through the work zone. Other continuous lasers such as Nd-Yag and carbon dioxide could be used in conjunction with a fast switching cell; e.g., a Kerr cell. As an alternative, crisscross grooves could be cut by a CW laser scanning across the substrate surface. Still another approach is to place a mask in the path of the incident beam to lay down a well defined pattern. As shown in Figure 5, the excimer laser beam passes through mask 42. The modulated light is focused by lens 44 as a mask pattern 46 on the surface 30 of substrate 32.

According to a second aspect of the invention, substrate 32 can be formed by incorporating filler particles of regular or irregular morphology into the substrate either at the time the substrate is made or, alternately, by forming the substrate first and then coating the surface with a filler loaded polymeric coating. Spherical fillers are preferable for they provide the surface morphology with a wide range of scattering angles. In addition, there would not be any sharp points that protrude from the surface.

According to a still further aspect of the present invention, the average roughness of the substrate should be at least 1/4 - 1/2 of the wavelength of the incident light. For example, with a laser having a visible light range of 660 - 680 nm, an average roughness of about 0.3 microns would be appropriate to produce the desired light scattering effect. For a wavelength range of 400 - 900 nm, a typical average roughness would range between $\lambda/4 - \lambda/2n$ where $\lambda$ is the wavelength of the incident light and n is the refractive index of the medium which the light travels.

From the above description, it is seen that the rough substrate surface, and the conforming overlying ground plane surface serve to break up the coherence of the reflection from the ground plane surface, eliminate interference fringes and hence eliminate the interference effect manifested as interference fringes on output prints later derived from the exposed photoreceptor.

While the invention has been described with reference to the structure disclosed, it will be appreciated that numerous changes and modifications are likely to occur to those skilled in the art, and is intended to cover all such changes and modifications which fall within the true spirit and scope of the invention. For example, hybrid-type photoreceptors are known in the art which use an evaporated charge generator layer which is densely packed with photogenerating pigments, but little polymer binder in the interstices. As a result, the primary reflection of light will be from the interference between the charge generator layer 36 and the charge transport layer 38, e.g. surface 37 in Figure 4. Since the rough surface morphology of substrate 30 is replicated through the charge generator layer 36, the reflection from surface 37 will be broken up eliminating the interference effects. The invention may also contemplate a photoreceptor where the charge transport and charge generator layers are formed within a single layer.

**Claims**

1. A photosensitive imaging member comprising at least a semi-transparent photosensitive layer contiguous to a ground plane substrate, said ground plane formed on a dielectric substrate having a roughened surface, said ground plane surface conforming to said roughened dielectric substrate surface whereby said ground plane surface is diffusely reflective to light incident thereon.

2. The imaging member of claim 1 comprising a charge transport layer contiguous to a charge generator layer, said charge generator layer overlying said ground plane layer formed on said dielectric substrate, and wherein said charge generator layer surface conforms to said roughened ground plane and dielectric substrate surface.

3. The imaging member of claim 1 or claim 2 wherein said roughened substrate surface is formed by a laser ablation process.

4. The imaging member of claim 3 wherein said roughened substrate surface is formed by directing the laser output through a mask and focusing the mask radiation pattern onto said substrate surface.

5. The imaging member of claims 1 or 2, wherein a plurality of filler particles are mixed into the substrate to produce a rough surface morphology.

6. The imaging member of claim 1 or 2, wherein a filler particle mixture layer is formed on the surface of said substrate, said mixture layer providing the rough surface morphology.

7. The imaging member of claims 1 or 2, wherein the average roughness of said substrate surface is approximately 1/4 - 1/2 the wavelength of said incident light.

8. The imaging member of claims 1 or 2 wherein the average roughness of said substrate surface is within a range of $\lambda/4 - \lambda/2$ where $\lambda$ is the wavelength of the light and n is the index of refraction of the medium in which the light travels.

9. A raster output scanning system comprising; means for generating a beam of high intensity, modulated coherent light, optical means for imaging said beam onto the surface of a photosensitive image recording medium, said recording medium comprising at least a semi-transparent photoconductive charge transport layer, overlying a charge generator layer and a conductive ground plane, said ground plane formed on a dielectric substrate having a roughened surface, said ground plane conforming to said roughened dielectric substrate surface whereby said ground plane surface is diffusely reflective to light incident thereon.

10. A process for forming a photosensitive imaging member comprising the steps of: providing a dielectric substrate with a roughened surface and forming a metal ground plane on said dielectric substrate, said ground plane conforming to said roughened dielectric substrate surface whereby said ground plane surface is diffusely reflected to light incident therein.

11. The process of Claim 10 wherein said dielectric substrate surface is roughened by a laser ablation process.

**FIG. 1**
PRIOR ART

**FIG. 2**

**FIG. 3**

**FIG. 4**

FIG. 5

European
Patent Office

EUROPEAN SEARCH
REPORT

Application Number

EP 91 10 9039

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 13, no. 324 (P-903)[3672], 21st July 1989; & JP-A-1 92 754 (RICOH CO., LTD) 12-04-1989 * The whole document * | 1,2,5-10 | G 03 G 5/10 |
| Y | IDEM | 3,4,11 | |
| D,X | GB-A-2 156 089  (CANON K.K.) * Claims; page 4, lines 80-104 * | 1 | |
| A | EP-A-0 161 933  (XEROX CORP.) * Claims * | 1-11 | |
| A | PATENT ABSTRACTS OF JAPAN, vol. 12, no. 473 (P-799)[3320], 12th December 1988; & JP-A-63 192 053 (KONICA CORP.) 09-08-1988 * The whole abstract * | | |
| Y | PATENT ABSTRACTS OF JAPAN, vol. 12, no. 349 (C-529)[3196], 20th September 1988; & JP-A-63 105 042 (TOYODA GOSEI CO., LTD) 10-05-1988 * The whole abstract * | 3,4,11 | TECHNICAL FIELDS SEARCHED (Int. Cl.5) G 03 G |

The present search report has been drawn up for all claims

| Place of search | Date of completion of search | Examiner |
|---|---|---|
| The Hague | 23 September 91 | HILLEBRECHT D.A.O. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

& : member of the same patent family, corresponding
document